(19) Europäisches Patentamt
European Patent Office
Office européen des brevets

(11) **EP 4 604 065 A1**

(12) **EUROPEAN PATENT APPLICATION**

(43) Date of publication:
**20.08.2025 Bulletin 2025/34**

(21) Application number: **24305238.8**

(22) Date of filing: **13.02.2024**

(51) International Patent Classification (IPC):
*G06T 13/40* (2011.01)

(52) Cooperative Patent Classification (CPC):
**G06T 13/40; G06T 19/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Dassault Systèmes
78140 Vélizy-Villacoublay (FR)**

(72) Inventors:
• **REDDI, SARATH
  Bangalore (IN)**
• **DE TEMMERMAN, PAUL
  Vélizy-Villacoublay (FR)**
• **BICHEBOIS, MANUEL
  Vélizy-Villacoublay (FR)**
• **CHEN, PINGHAN
  Vélizy-Villacoublay (FR)**

(74) Representative: **Bandpay & Greuter
11 rue Christophe Colomb
75008 Paris (FR)**

(54) **ALIGNMENT OF VIRTUAL MANIKINS**

(57)     The disclosure notably relates to a computer-implemented method for aligning a first virtual manikin with a second virtual manikin. The method comprises obtaining (S10) a first posture of the first virtual manikin matching a first posture of the second virtual manikin. The method comprises determining (S20) an offset between the positions of the joints of the first virtual manikin associated with the joints of the second virtual manikin. The method comprises obtaining (S30) a gesture of the second virtual manikin. The method comprises, for each second posture of the gesture, determining (S40) a second posture of the first virtual manikin matching the second posture of the second virtual manikin. The determined offsets between the associated joints are maintained in each determined second posture. Such a method forms an improved solution for aligning a first virtual manikin with a second virtual manikin.

```
┌─────────────────────────────────────────────────────┐
│ Obtaining a first posture of the first virtual      │
│ manikin matching a first posture of the second      │──┐ S10
│ virtual manikin                                      │  │
└─────────────────────────────────────────────────────┘
                          ↓
┌─────────────────────────────────────────────────────┐
│ Determining, for each given joint of the first      │
│ virtual manikin associated with a given joint of    │
│ the second virtual manikin, an offset between a     │──┐ S20
│ position of the given joint of the first virtual    │  │
│ manikin and a position of the given joint of the    │
│ second virtual manikin                               │
└─────────────────────────────────────────────────────┘
                          ↓
┌─────────────────────────────────────────────────────┐
│ Obtaining a gesture of the second virtual manikin   │──┐ S30
└─────────────────────────────────────────────────────┘
                          ↓
┌─────────────────────────────────────────────────────┐
│ For each second posture of the gesture, determining │
│ a second posture of the first virtual manikin       │──┐ S40
│ matching the second posture of the second virtual   │
│ manikin                                              │
└─────────────────────────────────────────────────────┘
```

FIG. 1

**Description**

**TECHNICAL FIELD**

The disclosure relates to the field of computer programs and systems, and more specifically to a method, system and program for aligning a first virtual manikin with a second virtual manikin.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

In these CAD solutions, virtual manikins can be used to emulate humans in the virtual environments to design, evaluate and assess the suitability of the objects in the early stages of design and well before actual prototypes in the real world. For example, these virtual manikins can be used to check that the design of objects conforms to humans with varieties of shapes and sizes, or to take realistic views of objects with humans in position. Notably, existing digital human modelling (DHM) solutions can emulate humans accurately in terms of posture modeling with a wide range of shapes and dimensions.

A major limitation in the use of virtual manikins lies in their positioning. Indeed, the positioning of a virtual manikin involves determining the best skeleton configuration and shaping the skin (which envelops the skeleton) according to the skeleton so that the resulting posture appears natural and realistic, adapted to the task scenario. In this respect, significant advances have been made, from conventional methods to prediction techniques based on Artificial Intelligence (AI). The literature on geometric modeling offers a wide variety of techniques for creating virtual manikins of different shapes according to the postural changes of the skeleton. However, the positioning of virtual manikins remains complex and time-consuming, and there is no efficient method for doing it automatically.

In particular, the lack of proper standardization and the application specific modeling resulted in simple to complex virtual manikins mimicking human behaviors with varying degree of accuracy. Several DHM apps are commercially available with diverse capabilities: some virtual manikins emphasizing on anthropometry and linkage structure accuracy, while some other virtual manikins being good at posture/motion modeling and biomechanics and the others stressed on behavioral and cognitive aspects. Because of this variability, the interoperability problems that exists across CAD systems are inherited by the virtual manikins as well. With the increasing use of multiple digital human apps in the same organization or in the collaborative organizations, the need for the communication between these apps in terms of exchange of data is growing.

Hence, different virtual manikins are generally involved in the design of a same product. For example, one virtual manikin can be used for ergonomics calculations, while another can be used for virtual rendering. However, there is no effective method for reproducing the posture of these different virtual manikin in relation to each other, notably because they do not have the same joints. Hence, each of the virtual manikins used has to be manually repositioned, even when they are performing the same gesture. Once the gesture of a first virtual manikin has been determined, it would be useful to be able to automatically position the other one according to the same gesture, but there is no efficient method for doing it automatically and accurately.

Within this context, there is still a need for an improved solution for aligning a first virtual manikin with a second virtual manikin.

**SUMMARY**

It is therefore provided a computer-implemented method for aligning a first virtual manikin with a second virtual manikin. The method comprises obtaining a first posture of the first virtual manikin matching a first posture of the second virtual manikin. Each virtual manikin comprises joints each representing a respective articulation and segments each connecting a respective pair of joints. Each respective joint of at least a portion of the joints of the first virtual manikin is associated with a respective joint of the second virtual manikin. Each joint of the first virtual manikin and joint of the second of the virtual manikin associated together both represent a same respective articulation. The method comprises determining, for each given joint of the first virtual manikin associated with a given joint of the second virtual manikin, an offset between a position of the given joint of the first virtual manikin and a position of the given joint of the second virtual manikin. The offset determined for at least one association of joints is non-zero. The method comprises obtaining a gesture of the second virtual manikin. The gesture comprises one or more second postures of the second virtual manikin. The method comprises, for each second posture of the gesture, determining a second posture of the first virtual manikin matching the second posture of the second virtual manikin. The determined offsets between the associated joints are maintained in each determined second posture.

The method may comprise one or more of the following:

- The first virtual manikin comprises at least one first pair of associated joints connected by a single segment. The second virtual manikin comprises, for each first pair, two or more segments between the joints associated with those of the first pair. The length of the single segment connecting each first pair in the first posture differs from that in at least one second posture;
- The joints of each virtual manikin include at least four distal joints. The segments connect, for each virtual manikin, the pairs of joints successively up to the distal joints. Each distal joint of the first virtual manikin is associated with a respective distal joint of the second virtual manikin. The offset determined for each association of distal joints is zero;
- Each distal joint has an orientation. The orientations between the associated distal joints are equal in each determined second posture;
- The obtaining of the first posture of the first virtual manikin matching the first posture of the second virtual manikin comprises performing a minimization of a cumulative distance between the associations of joints;
- The first virtual manikin comprises at least one joint connected to two associated joints. The determining of the second posture of the first virtual manikin comprises aligning the at least one joint with the two associated joints;
- Each virtual manikin represents a respective skin shape. The first virtual manikin comprises a mesh having vertices positioned on the skin shape represented by the first virtual manikin. The second virtual manikin comprises surface landmarks positioned on the skin shape represented by the second virtual manikin. The method further comprises, after the determining of the second posture of the first virtual manikin matching the second posture of the second virtual manikin, deforming the mesh of the first virtual manikin to match with the surface landmarks of the second virtual manikin;

- The deforming of the mesh comprises, for each segment of the first virtual manikin:

  ○ determining the vertices of the mesh belonging to the segment of the first virtual manikin; and
  ○ modifying the position of the determined vertices such that the resulting mesh contains the surface landmarks;

- The deforming of the mesh further comprises, before the modifying of the position, determining a local coordinate system comprising a first axis along the segment and two second axes perpendicular to each other and to the first axis. The determined vertices have coordinates in the determined local coordinate system. The modifying of the position comprises, for each determined vertex, modifying the coordinates of the vertex along the two second axes;
- The deforming of the mesh further comprises, for each pair of successive surface landmarks along the first axis:

  ○ determining a shape function between the successive surface landmarks of the pair; and
  ○ estimating a deformation factor to be applied to the mesh between the surface landmarks of the pair based on the determined shape function and an interpolation function, and

wherein the modifying of the coordinates of the vertex along the two second axes comprises multiplying the coordinates of the vertex along the two second axes by the estimated deformation factor;

- The number of joints of the first virtual manikin is lower than the number of joints of the second virtual manikin; and/or
- The first virtual manikin is an ergonomically accurate skeleton and/or the second virtual manikin is a biomechanically accurate skeleton.

It is further provided a computer program comprising instructions for performing the method.

It is further provided a computer readable storage medium having recorded thereon the computer program.

It is further provided a system comprising a processor coupled to a memory and a graphical user interface, the memory having recorded thereon the computer program.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG. 1 shows a flowchart of an example of the method;
- FIG. 2 shows an example of different morphologies represented by a virtual manikin;
- FIG. 3 illustrates the determining of a posture of the first virtual manikin matching the posture of the second virtual manikin;
- FIGs. 4 to 7 illustrate the obtaining S10 of the first posture of the first virtual manikin matching the first posture of the second virtual manikin;
- FIG. 8 illustrates the joint flexible process;
- FIGs. 9 to 11 illustrate the determining S40 of a second posture of the first virtual manikin matching the second posture of the second virtual manikin;
- FIGs. 12 to 17 illustrate the deforming of the mesh of the first virtual manikin to match with the second virtual manikin;
- FIGs. 18 to 20 illustrate examples of results of alignment between the source and target virtual manikins obtained using the method; and
- FIG. 21 shows an example of the system.

## DETAILED DESCRIPTION

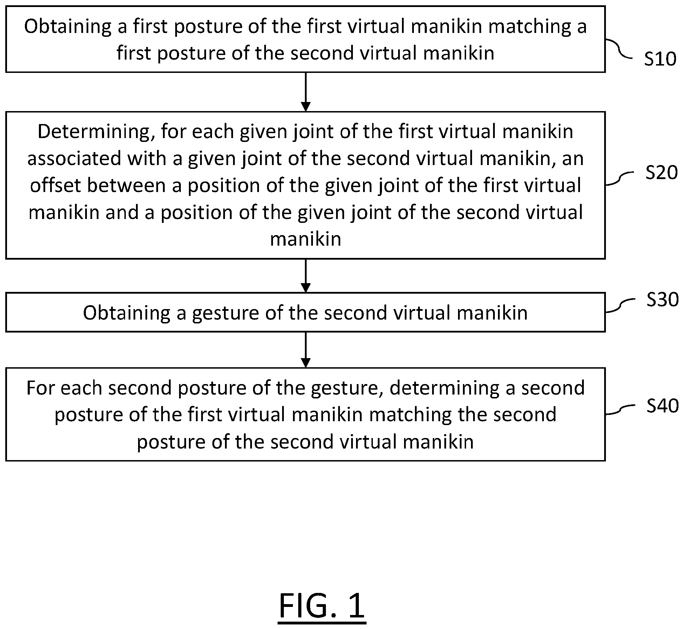

With reference to the flowchart of FIG. 1, it is provided a computer-implemented method for aligning a first virtual manikin with a second virtual manikin. The method comprises obtaining S10 a first posture of the first virtual manikin matching a first posture of the second virtual manikin. Each virtual manikin comprises joints each representing a respective articulation and segments each connecting a respective pair of joints. Each respective joint of at least a portion of the joints of the first virtual manikin is associated with a respective joint of the second virtual manikin. Each joint of the first virtual manikin and joint of the second of the virtual manikin associated together both represent a same respective articulation. The method comprises determining S20, for each given joint of the first virtual manikin associated with a given joint of the second virtual manikin, an offset between a position of the given joint of the first virtual manikin and a position of the given joint of the second virtual manikin. The offset determined for at least one association of joints is non-zero. The method comprises obtaining S30 a gesture of the second virtual manikin. The gesture comprises one or more second postures of the second virtual manikin. The method comprises, for each second posture of the gesture, determining S40 a second posture of the first virtual manikin matching the second posture of the second virtual manikin. The determined offsets between the associated joints are maintained in each determined second posture.

Such a method forms an improved solution for aligning a first virtual manikin with a second virtual manikin.

Notably, the method allows automatically reproducing the gesture of the second virtual manikin (hereinafter also referred to as the "source manikin") with the first virtual manikin (hereinafter also referred to as the "target manikin"). Indeed, for each second posture of the gesture, the method determines a second posture for the first ("target") virtual manikin matching the second posture of the second ("source") virtual manikin. Thus, the method allows reusing a gesture that has already been determined for another virtual manikin (the "source" virtual manikin), which enables to avoid having to manually reposition the "target" virtual manikin so that it performs the same gesture as the "source" virtual manikin.

In particular, the method reproduces the gesture of the "source" virtual manikin accurately and efficiently. Indeed, the differences between the two virtual manikins result in that, in order for them to be in realistic postures, there are joint offsets between their same joints. By maintaining these offsets, the method allows reproducing the movements for the "target" virtual manikin so that each determined posture of the "target" virtual manikin is more realistic. Moreover, maintaining offsets between associated joints is quicker and less computationally expensive than redetermining an equivalent posture each time. The method is therefore particularly efficient for obtaining these realistic postures.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

The method may be used for rendering the first virtual mannequin. For example, the method may be included in a rendering process, which may comprise, after the performing of the method, rendering the first virtual mannequin in each determined second posture. For example, in each second posture of the gesture, the second virtual manikin may be positioned relative to an object. In that case, the first virtual manikin may also be positioned relative to this object in each determined second posture. The rendering may thus be a rendering of the first virtual manikin positioned relatively to this object.

For example, the object may include a place where a human being can position himself, such as a seat in a car, a motorcycle, an aircraft cockpit or the workplace environments like assembly process layouts. In this case, the second virtual manikin may be positioned where the human it represents is to be positioned in that object, and each second posture of the gesture may be a posture of the second virtual manikin at that location. For example, the second posture(s) of the gesture may be used, using the second virtual manikin, to verify technical constraints for the human, such as the ergonomics of the position or safety in relation to external events. For example, the second virtual manikin may be a biomechanically accurate skeleton. On the other hand, the first virtual manikin may be used to add a human character to an image/video rendering of the object. For example, the first virtual manikin may be an ergonomically accurate skeleton. The rendering process may comprise capturing an image for each determined posture of the first virtual manikin. When several postures are determined, the rendering process may then comprise using the captured images (e.g., by programming their display one after the other in succession) for producing a video of the object with the human represented by the first virtual manikin positioned in relation to it.

The obtaining S10 of the first postures is now discussed in more detail.

The obtaining S10 may comprise an initial matching step for computing the first posture of the first virtual manikin matching the first posture of the second virtual manikin. The initial matching step may consider one of the two virtual manikins as being in a reference posture and may comprise computing a posture for the other virtual manikin matching this reference posture. For example, the initial matching step may consider the first posture of the first virtual manikin as the reference posture and may comprise computing the first posture of the second virtual manikin matching the first posture of the first virtual manikin. Alternatively, the initial matching step may consider the first posture of the second virtual manikin as the reference posture and may comprise computing the first posture of the second virtual manikin matching the first posture of the first virtual manikin.

In these two situations, the reference posture may for example be a posture in which the virtual manikin is standing upright. The obtaining S10 may comprise obtaining the reference posture by downloading it from a database. For example, this reference posture may be a standard posture of the virtual manikin. Alternatively, the obtaining S10 may comprise determining this reference posture by actions of a user, for example moving the joints of the virtual manikin so as to position the virtual manikin in the said reference posture.

It is now discussed how the initial matching step may compute a posture for one of the virtual manikins matching the posture of the other one of the virtual manikins. These details apply independently of whether the first or second virtual manikin is considered as being in the reference posture.

The initial matching step may initially comprise obtaining the associations of joints between the two virtual manikins. For example, a user may input the associations of joints. Alternatively, the associations of joints may already be determined and recorded prior to the executing of the method, and the obtaining of the association of joints may comprise retrieving them.

Then, the initial matching step may comprise determining a position for each of the joints of the virtual manikin for which a posture is determined. The computed posture matches with the posture of the other virtual manikin. It means that, in this posture, the position and orientation of distal joints like fingers, wrists, elbows, ankles exactly match for the first and second virtual manikins while proximal joints like pelvis, abdomen, thorax has some offset, and the cumulative offset distance between the joints that are associated in the two virtual manikins is minimized. The cumulative distance may be equal to the sum of the distance between the associated joints (i.e., the norm of the resulting offset). The computing of the posture may comprise performing this minimization of the said cumulative distance between the associated joints.

This minimization of the said cumulative distance may be performed while respecting one or more other constraints, e.g., including a selection from or all of the constraints listed hereinafter. A first constraint may be that the offset distance between distal joints of the two virtual manikins that are associated is (e.g., substantially) equal to zero. A second constraint may be that the orientation of distal joints of the two virtual manikins that are associated is (e.g., substantially) the same. A third constraint may be that the offset distance between joints of the two virtual manikins representing shoulders is (e.g., substantially) equal to zero.

The initial matching step has So far been described as included in the method. However, in other examples, the initial matching step may be performed prior to the method, and may further comprise, after the computing of the first posture of the first virtual manikin matching the first posture of the second virtual manikin, recording the first posture of the first virtual manikin matching the first posture of the second virtual manikin (e.g., in memory). In that case, the obtaining S10 may comprise retrieving the recorded the first posture of the first virtual manikin matching the first posture of the second virtual manikin. The initial matching step may also in that case include any of the features described so far.

The virtual manikins are now discussed in more detail.

Each virtual manikin comprises joints each representing a respective articulation and segments each connecting a respective pair of joints. The group of joints and segments is called the skeleton of the virtual mannequin. In examples, the virtual manikin may represent a respective skin shape of a human body, and may comprise additional elements for representing this skin shape (such as a mesh or surface landmarks, as will be explained later). The skeleton of the virtual mannequin is now discussed in more detail.

Each virtual manikin may comprise a respective joint for each main articulation of the human body. For example, each virtual manikin may comprise a respective joint for each of the shoulders, the elbows, the wrists, the hips, the knees, the ankles, the neck, one or more phalanges of the fingers and/or one or more of the vertebral joints (e.g., two or three vertebral joints distributed along the spine).

These joints representing main articulations may be associated in the two virtual manikins. Each of these associations associates a respective joint of the first virtual manikin and a respective joint of the second virtual manikin representing a same respective articulation in the virtual manikin to which they belong. Some of these associated joints like fingers, wrists, elbows, ankles may be distal joints (the other being proximal joints). For example, each virtual manikin may comprise at least four distal joints for a respective distal joint for the wrists and the ankles. Each virtual manikin may further comprise a respective distal joint for the neck and the one or more phalanges of the fingers.

Each virtual manikin may further comprise a root joint representing the pelvis (relative to which proximal and distal joints may be defined) and/or one or more additional joints representing other movement of the human body, such as the movement between the clavicle and the spine and/or the movement of the elbows. These one or more additional joints may not be associated and may differ between the two virtual manikins. For example, for the second virtual manikin, the additional joints may further comprise several joints representing additional vertebral joints. The number of joints of the first virtual manikin may be lower than the number of joints of the second virtual manikin.

The determining S20 of the offsets is now discussed in more detail.

The determining S20 is performed when both virtual manikins are in their respective first postures. It means that the offsets are determined between the positions of joints when both virtual manikins are in their respective first postures. For each virtual manikin, the positions of the joints considered are thus the positions of the joints in the first posture.

For each association of joints, the method determines a respective offset. The offset may be vector between the two positions of the associated joints. For example, the vector may be directed from the position of the given joint of the first virtual manikin to the position of the given joint of the second virtual manikin, or inversely. Its norm gives the offset distance between the joints. The offset vectors may be defined in two coordinate frames: one local frame attached at the joints and another world coordinate frame.

The determining of each offset may be based on coordinates of the positions of the associated joints. For example, the determining of an offset between two associated joints may comprise obtaining coordinates of two associated joints (i.e., when both virtual manikins are in their respective first postures), and, subtracting these coordinates so as to compute the vector between these two associated joints.

The determined offsets may be of dimension that is zero or not. The dimension of an offset may be the length of the offset (i.e., the norm of the vector). In particular, at least one determined offset may be of dimension that is non-zero. This means that, for at least one association of two joints, these two joints are not exactly superimposed. There is a non-zero offset between these two joints when both virtual manikins are in their respective first postures, superimposed together.

Each offset may be determined in a local coordinate frame which is attached to the joint from which it is determined (e.g., the one of the second virtual manikin). Each offset may also be determined in a global coordinate frame (i.e., constant regardless of posture and virtual dummy).

The obtaining S30 of the gesture is now discussed in more detail.

The obtained gesture may include only one second posture of the second virtual manikin. In that case, the method determines only one corresponding second posture for the first virtual manikin. This single second posture may be used for obtaining an image of the first manikin in this posture (e.g., in relation with an object as previously discussed). Alternatively, the gesture may include several postures, e.g., that follow one another to form a gesture performed by the second virtual manikin. In that case, the method determines several corresponding second postures for the first virtual manikin, and these postures may be used for obtaining several images or a video of the first manikin performing this gesture (e.g., in relation with an object as previously discussed).

The obtaining of the gesture comprises obtaining each second posture of the gesture. The obtaining of each second posture may be performed as the obtaining S10 of the reference posture previously discussed. For example, the gesture may be predetermined and recorded in a database, and the obtaining of the gesture may comprise retrieving the said gesture from the said database. For example, the gesture may have been determined using another application, for example to verify ergonomic constraints with the second virtual manikin. Alternatively, the obtaining of the gesture may comprise determining of each second posture by actions of a user, for example moving the joints of the second virtual manikin so as to position it in each second posture.

The determining S40 of the second posture(s) for the first virtual manikin is now discussed. When the gesture comprises only one second posture, the method determines a single second posture for the first virtual manikin. When the gesture comprises several second postures, the method determines a respective second posture of the first virtual manikin for each of them. In that case, the method may determine all the second postures for the first virtual manikin at the same time, or one after the other in succession.

The determining S40 of a given second posture is now examined in more detail. However, these details apply equal to any of the determined second postures when the gesture comprises more than one.

The determined second posture of the first virtual manikin matches the second posture of the second virtual manikin. However, the second postures are not determined using a matching step as the initial matching step previously discussed regarding the step S10. The second posture are determined by maintaining the determined offsets between the associated joints. In other words, the determined offsets may be constant in all the postures (i.e., in the local coordinate frames which are attached to the joints from which they have been determined). It means that the second posture may be deduced directly from the positions of the joints of the second virtual manikin and the determined offsets, without performing the previously discussed minimization. This is quicker and less computationally expensive than redetermining an equivalent posture each time.

The determining S40 of the given second posture may comprise deducing the given second posture from the second posture of the second virtual manikin and the determined offsets. For example, the determined offsets may be embedded into initial relative configurations. The determined offsets may be expressed in terms of transformation matrices (e.g., from the position of joints of the second virtual manikin to the position of joints of the first virtual manikin), and the method may comprise using these transformation matrices for deducing the given second posture of the first virtual manikin from the second posture of the second virtual manikin. For example, the method may comprise applying these transformation matrices to the joints of the second virtual manikin in the second posture, thereby obtaining the positions of the joints of the first virtual manikin associated with them, and thus the given second posture of the first virtual manikin.

Each offset may be maintained in a local coordinate frame which is attached to the joint from which it is determined. The method may thus determine the position of the associated joints of the first virtual in their respective local coordinate frames, but may then transpose this position in the global coordinate frame (considering the orientation and position of the respective local coordinate frames with respect to the global coordinate frame). For the distal joints, the determined position may be the same as that of the second virtual manikin (zero offset for these joints). For other associated joints with non-zero offsets, the determined positions may differ from the determined offsets.

In examples, the first virtual manikin may comprise at least one first pair of associated joints connected by a single segment. This means that, for each first pair, the first virtual manikin does not include any other joints between the two associated joints of the first pair (these being associated with respective joints of the second virtual manikin). In that case, the second manikin may comprise, for each first pair, two or more segments between the joints associated with those of the first pair. Hence, contrary to the first manikin, the second virtual manikin includes other joint(s) between the joints of the corresponding pair. This situation may occur for example for vertebral joints, for example when the second virtual manikin comprises more of these joints than the first virtual manikin.

In that case, for the first virtual manikin, the length of the single segment connecting each first pair in the first posture may differ from that in at least one second posture. In other words, the segment size may vary for the first virtual manikin between the initial first posture and the determined second posture(s). This improves the accuracy of the postures determined for the first virtual manikin. Indeed, keeping the length of each segment constant would lead to variations in the offsets of the associated joints, which would reduce the accuracy of the rendering obtained with the virtual mannequin, as previously explained.

In examples, each distal joint may have an orientation. The orientation of a distal joint may be represented by a respective rotation matrix. The respective rotation matrix may comprise columns each representing a respective axis of the coordinate frame attached at the distal joint. For example, the rotation matrix of the distal joint representing the wrist may determine the orientation of the hand. In that case, the orientation of the distal joints may also be the same as that of the second virtual manikin. The orientations between the associated distal joints may be equal in each determined second posture. For example, the method may comprise, for each distal joint of the first virtual manikin, obtaining the orientation of the distal joint with which it is associated, and applying in the determined second posture this orientation to the distal joint. In other words, the orientations of distal joints of the first and second virtual manikins always correspond for each second posture adopted by the second skeleton.

In examples, some of the joints that are associated prior to the executing of steps S10 to S40 may be omitted (i.e., may be dissociated before the executing of steps S10 to S40). Each omitted joint may not be considered during the determining S20 of the offsets. The joints that are associated prior to the executing of steps S10 to S40 are referred to as anchor joints, and the number of associated joints during the executing of steps S10 to S40 may be lower than the number of anchor joints (i.e., some of them may be omitted).

For example, prior to the execution of steps S10 to S40, at least one joint may be associated with a respective joint of the second virtual manikin, and the method may comprise, prior to the determining S20 of the offsets, removing the association for each of the said at least one joint. Hence, when step S20 is executed, the said at least one joint may not be associated, and no offset may be determined for the said at least one joint (i.e., the said at least one joint is omitted). Then, during step S40, for determining the second posture of the first virtual manikin, instead of placing the said at least one joint using the offsets (as discussed above for the associated joints), the method may comprise aligning the said at least one joint with the two associated joints connected to it. For example, the method may position the said at least one joint on a straight line connecting the two associated joints connected to it, for example at an equivalent distance between these two associated joints as in the first position. This omission of joints between two already associated joints reduces the risk of over-deforming the skin mesh. This also offers a great advantage in controlling the deformation of the skin mesh as required.

In examples, each virtual manikin may represent a respective skin shape of a human body. The skin shape may be represented differently in the two virtual manikins. For example, the first virtual manikin may comprise a mesh having vertices positioned on the skin shape represented by the first virtual manikin. The second virtual manikin may comprise surface landmarks positioned on the skin shape represented by the second virtual manikin.

In that case, for each second posture determined during step S40 (i.e., after the determining of a respective position for each joint of the first virtual manikin in this second posture), the method may comprise deforming the mesh of the first virtual manikin to match with the surface landmarks of the second virtual manikin. The position of the surface landmarks is the position of them when the second virtual manikin is in the considered second posture. Their position may change between the different postures. The position of the surface landmarks for the second virtual manikin may be predetermined (e.g., similarly than the position of the second virtual manikin in the second posture), or automatically computed (e.g., considering the position of the joints of the second virtual manikin in the second posture). For example, the position of the surface landmarks for the second virtual manikin may depend on the build of the represented human. The deformation of the mesh for the first virtual manikin may be performed such as the resulting deformed mesh passes (at least substantially) through all the surface landmarks (e.g., with a tolerance of 2 to 5 millimeters). The deformation of the mesh allows reproducing the build of the represented human for the first virtual manikin, thus enhancing the realism of the gesture reproduction.

Examples of how the mesh deformation may be performed for each second posture determined at step S40 are now present in more detail. These examples allow achieving particularly effective and realistic mesh deformation while reducing the risk of unrealistic deformation, and therefore particularly optimal subsequent rendering. However, in other examples, the method may use any other deformation method that enables matching the mesh of the first virtual manikin with the surface landmarks of the second virtual manikin.

In examples, the deforming of the mesh may consider each segment of the first virtual manikin individually, and may, for each segment, modify the vertices belonging to this segment together. For example, the method may comprise, for each segment of the first virtual manikin, determining the vertices of the mesh belonging to the segment of the first virtual manikin, and, modifying the position of the determined vertices such that the resulting mesh contains the surface landmarks. The surface landmarks may be those of the second virtual manikin which belong to the portion delimited by the segment.

In examples, the position of the determined vertices may be modified along a direction which is perpendicular to the segment. For example, the deforming of the mesh may further comprise, before the modifying of the position, determining a local coordinate system comprising a first axis along the segment and two second axes perpendicular to each other and to the first axis. The determined vertices may have coordinates in this determined local coordinate system. The modifying of the position may comprise, for each determined vertex, modifying the coordinates of the vertex along the two second axes (i.e., the one perpendicular to the segment). This prevents the mesh from being unrealistically distorted.

In examples, the deformation of the mesh may be controlled using shape functions defined along the segment. In particular, the method may consider one shape function for each pair of successive surface landmarks along the said first axis. In that case, the method may further comprise, for each pair of successive surface landmarks along the first axis, determining a shape function between the successive surface landmarks of the pair, and, estimating a deformation factor to be applied to the mesh between the surface landmarks of the pair based on the determined shape function and an interpolation function. Then, for modifying the coordinates of each vertex along the two second axes, the method may comprises multiplying the coordinates of the vertex along the two second axes by the estimated deformation factor. This allows quickly and efficiently deforming the mesh and achieving a resulting mesh deformation which is optimum.

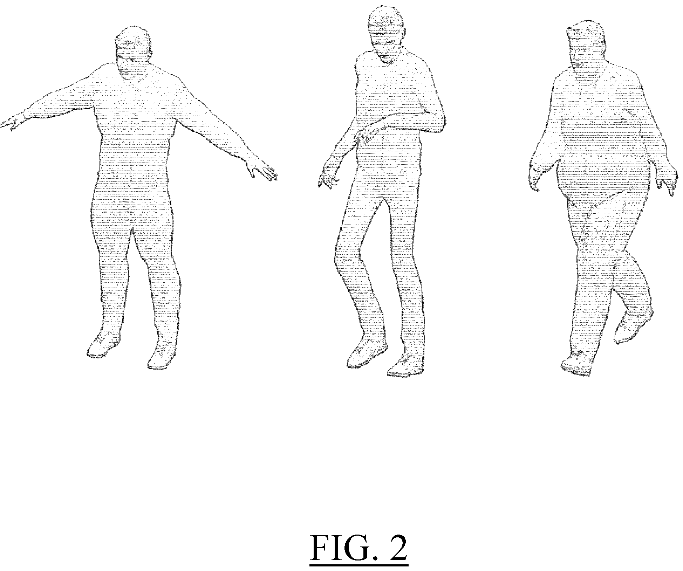

With reference to FIGS. 2 to 21, an example of implementation of the method is now described.

The context of posture prediction in digital human modelling (DHM) involves determining the best virtual manikin configuration including the position for joints and segments of the virtual manikin (referred to as the skeleton of the virtual manikin) and shaping the skin (which wraps the skeleton) in line with the skeleton so that the resultant posture looks natural and realistic suited to the task scenario. Notably, existing digital human modelling (DHM) solutions can emulate humans accurately in terms of posture modeling with a wide range of shapes and dimensions as shown in FIG. 2.

In this respect, significant advances have been made, from conventional methods to prediction techniques based on Artificial Intelligence (AI). Similarly, the literature on geometric modeling offers a wide variety of techniques for creating DHMs of different shapes according to the postural changes of the skeleton. However, positioning of virtual manikins is still relatively complex and time-consuming, and there is no efficient method for doing it automatically.

The lack of proper standardization and the application specific modeling resulted in simple to complex DHMs mimicking human behaviors with varying degree of accuracy. Several DHM apps are commercially available with diverse capabilities; some emphasizing on anthropometry and linkage structure accuracy, while some models are good at posture/motion modeling and biomechanics and the others stressed on behavioral and cognitive aspects. Because of this variability, the interoperability problems that exists across CAD systems are inherited by the DHMs as well. With the increasing use of multiple digital human apps in the same organization or in the collaborative organizations, the need for the communication between these apps in terms of exchange of data is growing.

In the context of posturing sharing between two or more human apps, along with the skeletal configuration, it may also be useful to match the shape of the target manikin with that of source manikin. The skeletal and shape matching is very essential in constrained environments where skeletal configuration alone cannot predict the fit and accommodation aspects, but the shape and volume of the skinning plays prominent role. Existing solutions do not address this aspect, especially when the considered communication is between two human apps with different skeleton and shape configurations.

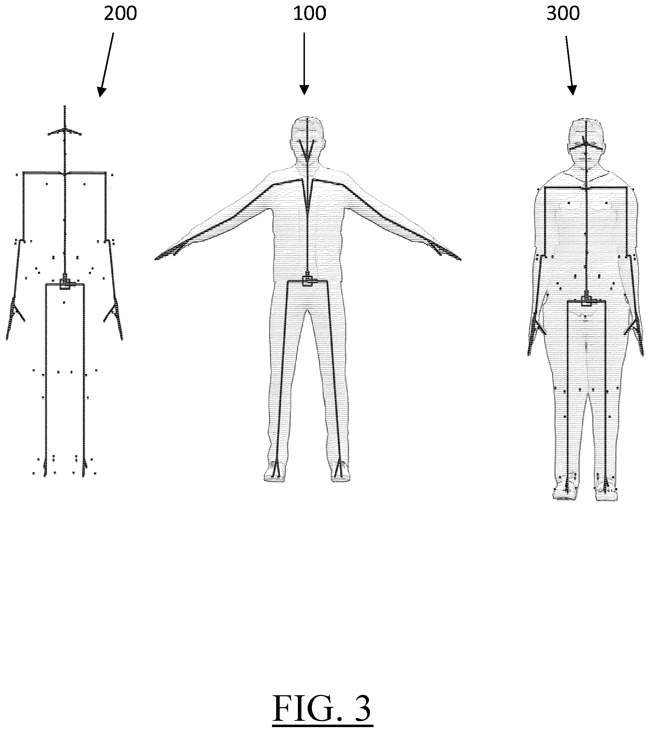

FIG. 3 illustrates the determining of a posture of the first virtual manikin 100 matching the posture of the second virtual manikin 200. The objective is to fit the target virtual manikin 100 (the said first virtual manikin) onto the source virtual manikin 200 (the said second virtual manikin) expressed in terms of skeleton and surface landmarks by manipulating the skeleton and surface mesh of the target virtual manikin 100 so as to obtain the posture 300 matching the posture of the source virtual manikin 200.

Existing solutions for solving the posture mapping problem may involve modeling the entire whole structure at a time and posing it as an inverse kinematics problem. However, it requires modeling all the joints starting from root using an objective function and initial relative configurations as constraints. As the human structure is both kinematically and dynamically redundant with hundreds of joints, converging to a feasible solution is very tedious task.

Moreover, when the source skeleton acquires new posture, some or all its joints change their configuration, and these joints can either be common joints or non-common joints (the joints on source skeleton which do not have equivalent in the target skeleton). However, the target skeleton has only the common joints and the solution to realize the same posture has to be obtained only by manipulating the common joints respecting the initial relative configurations. This further complicates the problem of posture mapping.

The method solves the above-mentioned limitations of existing solutions. Notably, the method provides a comprehensive skeleton driven joint flexible methodology that allows matching both the skeleton posture and shape of the target virtual manikin with that of the source virtual manikin. In particular, the method allows mapping the posture of a high degree of freedom virtual manikin (the source virtual manikin), with a specific anthropometry and shape, onto a relatively less degree of freedom virtual manikin (the target virtual manikin), notably by matching skeletal shape, size and posture.

The method, which aims at synchronizing shape and posture between two manikins, may comprise:

- performing the initial matching step for obtaining S10 the first posture of the target virtual manikin matching the first posture of the source virtual manikin;
- determining S20 the offsets between the associated joints;
- determining S40 the second posture(s) of the target virtual manikin matching the second posture (s) of the source virtual manikin in the obtained gesture, e.g., by modifying the length of segment(s) of the target virtual manikin;
- maintaining the determined offset between the associated joints;
- omitting one or more anchor joints; and/or
- resizing the skin shape mesh matching.

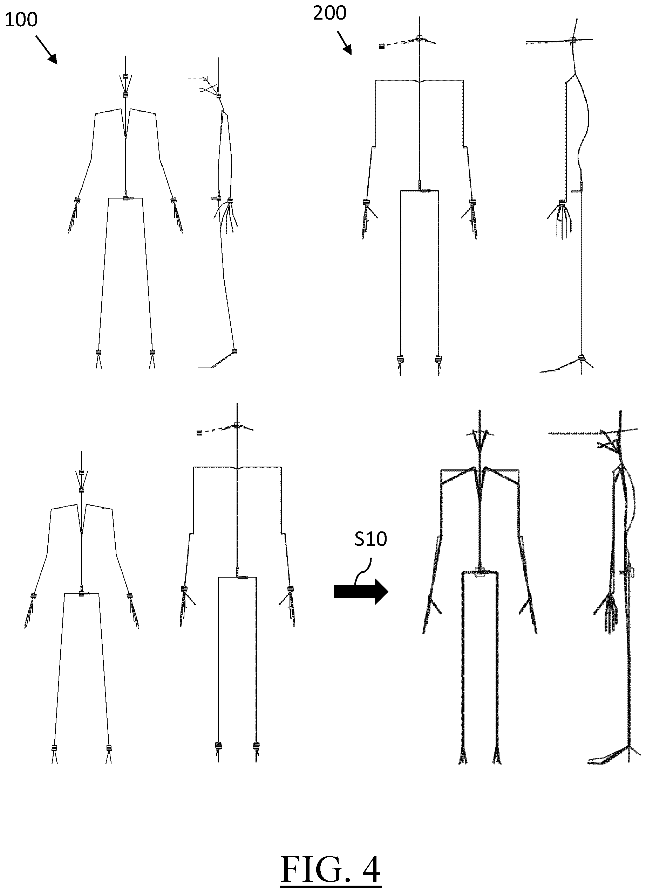

Matching the dimensions of the skeleton bones involve identifying the joints to be associated and changing bone lengths using the offsets chosen for the associated joints. As shown in FIG. 4, the target virtual manikin 100 and the source virtual manikin 200 may initially have different heights with varying bone lengths. The matching of the skeletons carried out as shown in the figure 4(c) using the idea of minimum anchor-offset method. The mapping S10 of skeleton configurations involve matching the end effectors (hands and legs) of the two manikins for all the configurations without disturbing the relative configurations of the anchor joints. The method also has the feasibility to make the anchor joints active or passive (i.e., they may be omitted or not during steps S10 to S40) depending on the synchronization and deformation of skin mesh.

The method may consider the posture of the manikin using the transformation matrices at the joints. Each joint may have its own local coordinate frame and posture is expressed in terms of global/world coordinate frame. As shown in FIG. 4, the initial posture 100 of target skeleton is different from source skeleton 200. Once both the skeletons synchronized initially S10 (with appropriate offsets at spine/torso and zero offsets for hands), for every new posture the source skeleton assumes, the target skeleton match its posture by maintaining the initial relative configurations at each of the common joint constant.

The task of maintaining the initial relative configurations constant for all the postural changes is difficult and the challenge is there is no one to one correspondence between source and target skeleton as source skeleton has a greater number of joints. For example if the configuration of a joint on the torso of the source skeleton changes, the task of synchronizing the target skeleton maintaining the initial relative configurations is challenge and this method addresses the issue by modifying the bone lengths between associated joints (the said joint flexible process).

Hence, advantages of the method include the fact that the method allows interoperability between two distinct virtual manikins, performing posture and shape matching between two distinct virtual manikins in real time and using model manipulators having spherical joints. Moreover, the method is robust as mathematical processes are free of inverse computations.

One requirement of posture and shape mapping between two virtual manikins with different architectures may be that the end posture of the target virtual manikin, which is defined by the position of distal segments like hands and legs, matches with its counter parts of the source virtual manikin. If the hand pertaining to the source virtual manikin reaches a particular point, the corresponding hand of the target virtual manikin may reach the same position and orientation without changing the relative configurations of the associated joints.

Existing solutions may consider that all the joints of the target virtual manikin coincide with the corresponding joints of the source virtual manikin (i.e., using zero-dimensional offsets). Using zero-dimensional offsets has limitations when the skeletons are asynchronous (i.e., the associated joints are not located at same position). Indeed, the target virtual manikin fails to synchronize its joints with the source virtual manikin, and the resulting posture of the first virtual manikin is distorted (see the resulting posture 302 obtained using an existing solution).

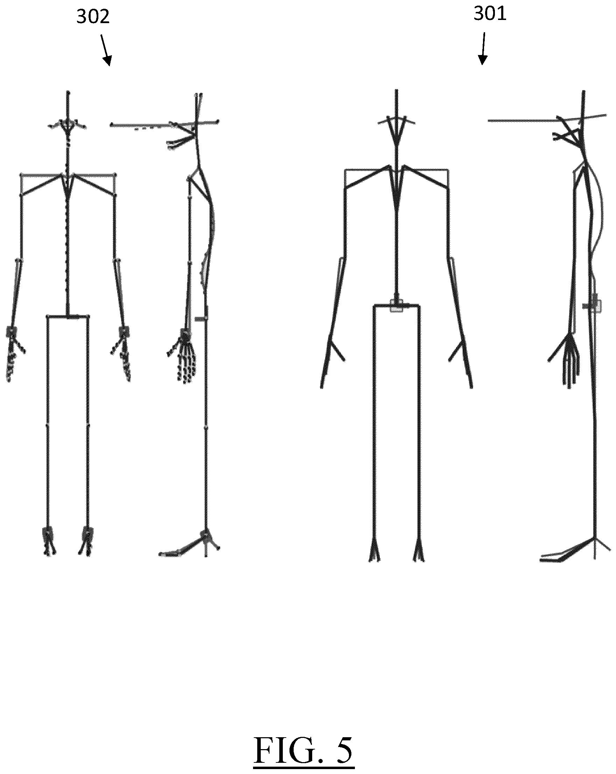

In order to solve this problem, the method determines the offsets between the associated joints of the two virtual manikins and maintain these determined offsets for each computed posture. FIG. 5 illustrates an example of resulting posture 301 using the method. The figure shows that the resulting 301 posture is realistic and respects the initial proportions of the virtual mannequin.

The obtaining S10 of the first posture of the first virtual manikin is now discussed. The obtaining S10 may comprise matching the initial configurations (i.e., the first postures). The matching may comprise first identifying the associated joints on both the virtual manikins.

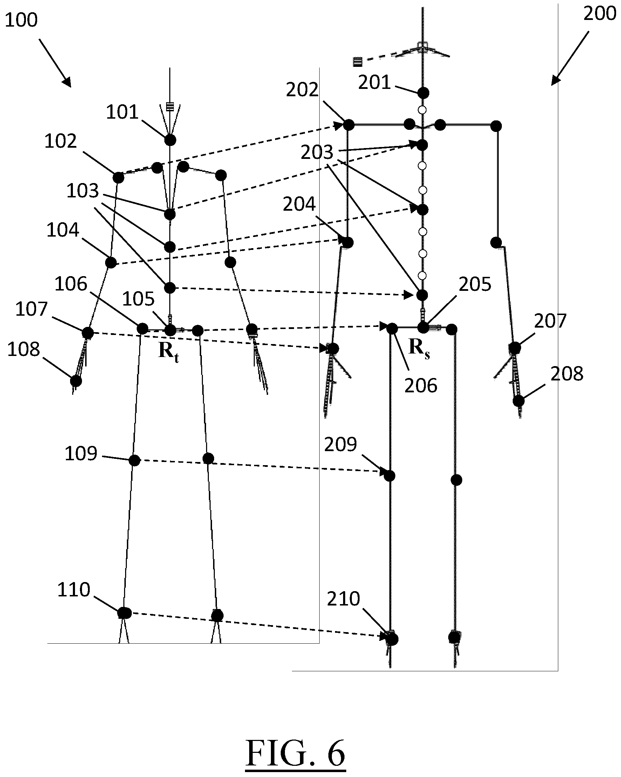

FIG. 6 illustrates an example of the associated joints of the two virtual manikins. Each virtual manikin comprises joints each representing a respective articulation of the human body. Some of them (for main articulations) are associated. The first virtual manikin 101 comprise a respective joint for each of the shoulders 102, the elbows 104, the wrists 107, the hips 106, the knees 109, the ankles 110, the neck 101, one or more phalanges of the fingers 108 and/or three vertebral joints 103. Each of these joints is associated with a corresponding joint of the second manikin, which thus also comprises a respective joint for each of the shoulders 202, the elbows 204, the wrists 207, the hips 206, the knees 209, the ankles 210, the neck 201, one or more phalanges of the fingers 208 and/or three vertebral joints 203. Some of these associated joints are distal joints. In particular, the joints representing the neck 101, 201, the wrists 107, 207, the phalanges of the fingers 108, 208 and the ankles 210 are distal joints in this example. $R_s$ 105 and Rt 205 are the root (pelvis) joints of the respective skeletons.

The objective is to maintain the relative configurations of these associated joints with or without offset (for distal joints) for the all the postures of the source manikin. The joints that are not associated as shown in the FIG. 6 are free and their rotations are captured at the associated joints.

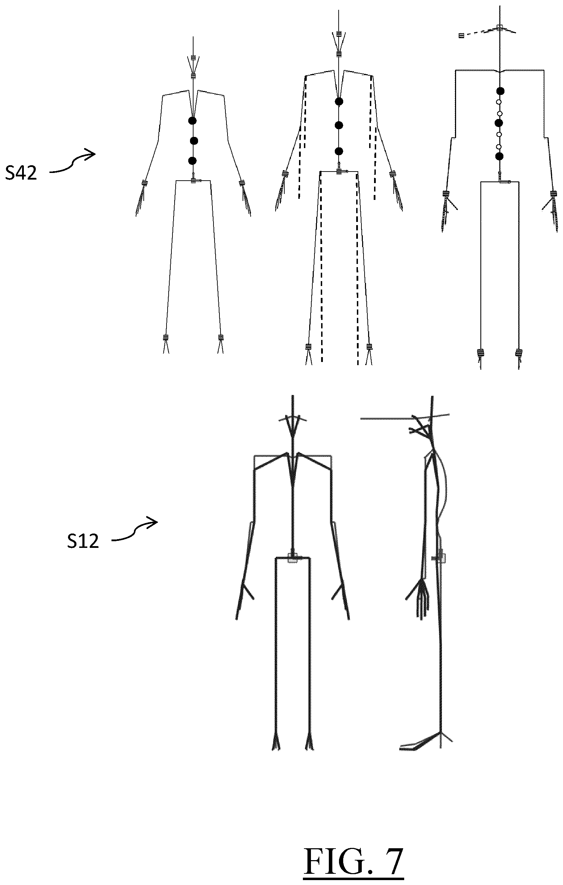

The method determines the posture of the first manikin matching the posture of the second manikin by minimizing an overall/cumulative offset distance at all the associated joints, while constraining the shoulder offset to zero to make the posture synchronization at the end effectors. During the determining of a posture of the first virtual manikin matching a posture of the second virtual manikin, the method may comprise adjusting S42 the respective segment lengths of the first virtual manikin so as to maintain the offsets as shown in FIG. 7 (joint flexible process). Initially, the initial matching step may also comprise re-orienting S12 the associated joints of the target virtual manikin after determining the compensatory angle rotations to finally match the initial configurations as shown in FIG. 7.

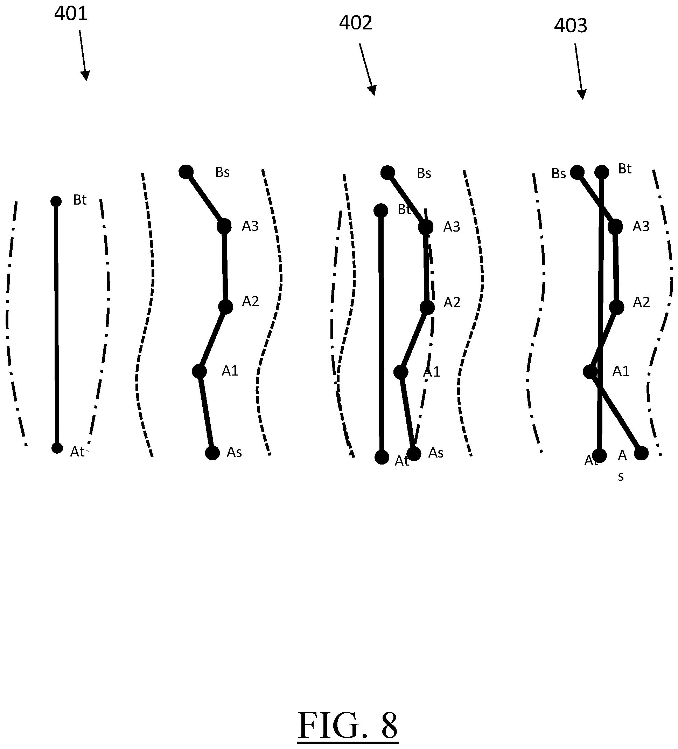

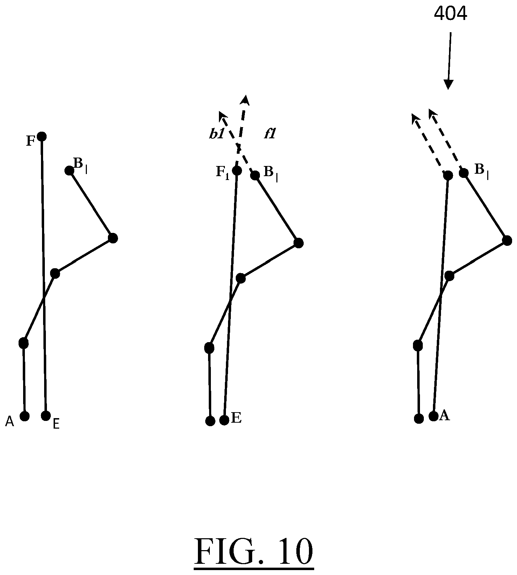

The joint flexible process is now discussed in reference to FIG. 8. The purpose is to map the joint parameters from the source skeleton to the target skeleton in such a way that the relative posture (skeleton and shape) is always intact. The complex skeleton which is biomechanically more accurate and where the postures are defined is termed as source skeleton. The simple skeleton where the motion of the skinning is defined is termed as target skeleton. FIG. 10 shows the two virtual manikins initially not aligned 401.

As shown in FIG. 10, the joint flexible methodology involves, considering two successive joints of the target skeleton with its shape and modifying its bone size and shape of the skin around the bone in such a way that it conforms to its counter parts on the source skeleton. As depicted in FIG. 10, the joints At, As and Bt, Bs are not at the same location (see the superposition 402 of the two virtual manikins). The posture synchronization includes matching the segment size and shape of the skinning with that of the source virtual manikin, so as to align 403 the target virtual manikin on the source virtual manikin.

The kinematic structure is the mathematical equivalent of a skeletal structure and comprises joints and link definitions along with types of motions. It may include the following elements:

- Defining the type of joint and its degrees of freedom (DOF);
- Defining the order of DOF's (the order in which the different DOF's are invoked);
- Defining coordinate frames to compute joint motions;
- Selecting proper representation for the joint motion (Euler, Axis-angle, Quaternions);
- Defining the relationships between the consecutive joints; and/or
- Determining the relative motions using the local and global transformations.

There are multiple ways to define the above aspects and, depending on the requirement, the method may use different methods to completely define the skeletal structure. For a given human geometry/skinning varieties of skeletons can be defined depending on the fidelity required. In the present case there are two skeletons where posture/motion is defined on source skeleton and the skinning is defined on the target skeleton. To map the posture/motion, the relationship with the target skeleton can be established so that mapping of the joint configurations can be accomplished in a way that the relative posture remains intact.

The two skeletons are defined independently and therefore apart from the difference in number of bones and joints, the way the kinematic structures are defined (which include the type of joints, the DOF, the coordinate frames and the representation of the motion) may also be different. These variations in the kinematic structures can be derived from their respective global transformation matrices as they preserve the information pertaining to the kinematic structure.

The first step in deriving the relationship is to select the joints on the two skeletons for mapping (i.e., the associated joints). As the target skeleton has lesser number of joints, the equivalent joints need to be identified on the source skeleton with respect to target skeleton.

An initial starting posture (i.e., the first posture) for both the skeletons may be selected and the global configurations of the common joints are to be extracted to derive the relationship (i.e., the offsets). Usually the initial posture is same as the 3D rigged human skinning posture 300 of FIG. 3 obtained from range scanners or human rendering applications. Otherwise a zero-configuration posture on both the skeletons may be chosen as initial posture.

The method may comprise extracting the global configurations (in terms of transformation matrices) from the source and target skeletons and determining the initial relative configuration between common joints of source and target skeleton. These configurations form the relationship between the source and target skeletons and for any posture that the source skeleton conceives, appropriate compensation need to be derived for the target skeleton joints such that the initial relative configurations may always remain invariant.

The determining S40 of the second posture(s) for the first virtual manikin is now discussed. Instead of modeling the whole structure as an inverse kinematics problem, the method considers two common joints at a time (starting from root joint) to model the compensatory configuration on the target skeleton for the postural changes of source skeleton. The method may also consider a virtual prismatic joint (unlike articulated joints, prismatic joints change the relative distance of bones) between two joints on the target skeleton thus making the bone lengths flexible y.

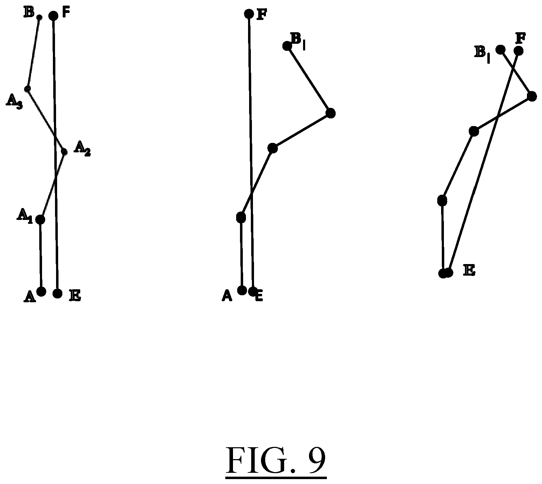

There may be multiple intermediate joints for the source skeleton between two common joints as shown in FIG. 9. The displacement of joint B with respect to the joint A may be attributed to some or all of the intermediate joints (A1, A2, A3) till the joint A.

Let $T_B^A$ be the initial transformation matrix of joint B with respect to joint A of the source skeleton and is given by $\begin{bmatrix} R_B^A & P_B^A \\ 0 & 1 \end{bmatrix}$ where $R_B^A$ is the initial orientation of joint B, and $T_{B1}^A$ be the final transformation matrix of $B_1$ and is expressed as $\begin{bmatrix} R_{B1}^A & P_{B1}^A \\ 0 & 1 \end{bmatrix}$ where $R_{B1}^A P_{B1}^A$ are the final rotation matrix and position of joint B. Similarly $T_F^E$ is the initial transformation matrix of F with respect to joint E of target skeleton and is

expressed as $\begin{bmatrix} R_F^E & P_F^E \\ 0 & 1 \end{bmatrix}$ and $T_E^O$ be the initial transformation matrix of E with respect to origin/root.

The transformation matrix of B1 with respect to E can be $T_{B1}^E$ and may be determined using the following equation (1):

$$T_{B1}^E = T_E^{O-1} * T_{B1}^A \quad ... \ (1)$$

Let the relative initial transformation between B and F be $T_B^F$ and is determined using the following equation (2):

$$T_B^F = T_{B1}^E{}^{-1} * T_B^A \quad ... \ (2)$$

Let the distance between AB be dAB and is the norm of $P_B^A$. Similarly the distance between AB1 be dAB1 and is the norm of $P_{B1}^A$. On the target skeleton, the distance between PQ be dPQ which is nothing but the length of the bone segment and is determined from the norm of $P_{B1}^{A1}$.

The maintaining of the determined offsets is now discussed in more detail.

The compensatory movement to displace the joint F to match with the position of B1 may be achieved only by using the joint E. Let the unit vectors of EF and EB1 be p1 and p2 and may be computed from $T_F^E$ and $T_{B1}^E$. Let $\theta_{eswing}$ be the angle between p1 p2 and p3 be the unit vector normal to p1 and p2 and these parameters may be determined using the geometric relations. Construct the rotation matrix $LR_E$ using $\theta_{eswing}$ and p3 and is nothing but the rotation required to match the joint F on target skeleton with the final position of joint B. Though dAB and dEF are same, dAB1 is different because of rotations of intermediate joints on the source skeleton. But dEF is constant as it is the bone length between joints E and F and no amount of $\theta_{eswing}$ rotation can match the location of joint F with B1.

To resolve this issue, the method may add a virtual prismatic joint between the joint E and F manipulating with which the bone length dEF may be varied to match with dAB1. When the structure returns to its initial posture, the bone lengths will come back to their original values. The new position vector PEB1 between E and B1 can be computed using $T_{B1}^E$ and dAB1.

The method may comprise constructing a new transformation matrix $T_{Enew}^O$ using $LR_E$ and PEB1 and appending it to the global matrix $T_E^O$. When $T_{Enew}^O$ is applied on local transformation of F, the joint F gets transformed to B1.

Matching the position of joint F with B1 may be a necessary but not a sufficient condition for posture mapping. The joint F may be re-oriented to respect the initial relative configurations. When the joint F matches with the position of B1, the unit vectors which are connecting to the successive branch of the structure may be oriented in different directions as shown in FIG. 10. Using geometric relations, the method may comprise computing the magnitude of rotation $\varnothing_{fswing}$ to match the unit vector f1 with b1 as shown in the last position 404 of FIG. 10. But matching these two-unit vectors will not necessarily satisfy the initial relative configuration constraint because of existence of twist component. Therefore, the method may comprise determining the twist component required to satisfy the constraint.

Let Tbsi, Tbsc, be the initial and final global transformations of the joint B. Similarly Tfsi, Tfsc are the initial and final global transformations of joint F where only the swing component of Tfsc is computed already.

The initial relative configuration of joints B and F is given by the equation 2 and since it may be useful to preserved it at all posture variations, the method may comprise assigning the relation to final configurations as well, using the following equation (3):

$$T_{fsc} = T_{bsc} * T_B^F \ ... \ (3)$$

The method may comprise computing the twist component using Tfsc and its swing component which is already determined thus ensuring the posture mapping for a group of segments between two common joints of the source skeleton on to the target skeleton. The same procedure is followed to successive branches of segments till the end effectors.

The omission of anchor joints is now discussed in more detail. One advantage with the joint flexible process is that the anchor joints may be excluded from the posture synchronization process and the connection may be reestablished in distal segments as shown in FIG. 9. This flexibility allows the elimination of unwanted distortion in the skin mesh.

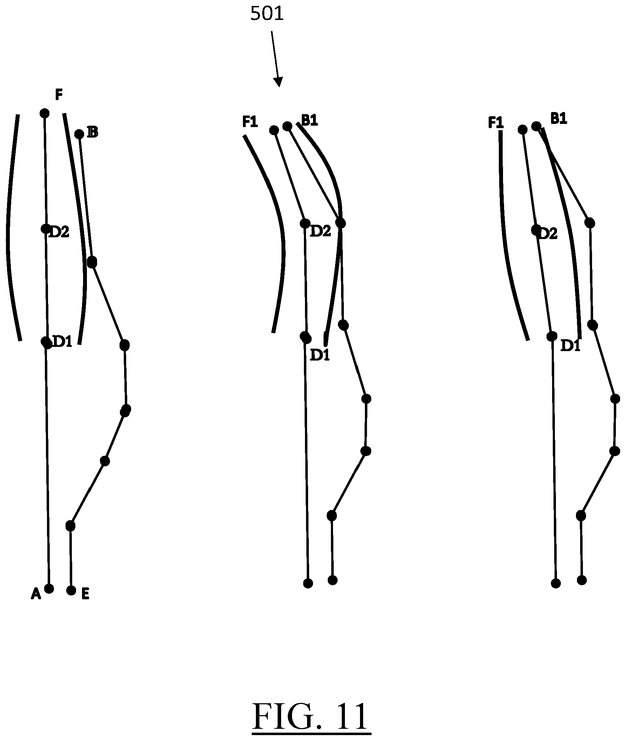

As shown in FIG. 11, if the source joint B changes position to B1, there multiple options for posture synchronization to match the configuration of joint F with B1. Either the bone segment FD2 as shown in the position 501 may be manipulated persevering the anchor relationship or the bone FD1 may be manipulated to achieve the same relationship by making D2 segment passive (omission) relative to D1 thus re-establishing the relationship between joint F and joint B. However, in first option, the skin mesh distorts more when compared to second option. Therefore, through this omission of redundant joints, re-establishing the synchronization process with other joints ensures smooth deformation of skin mesh. This feasibility gives a big advantage in controlling the skin mesh deformation according to the requirement.

An example of the deformation of the mesh of the first virtual manikin is now discussed in more detail.

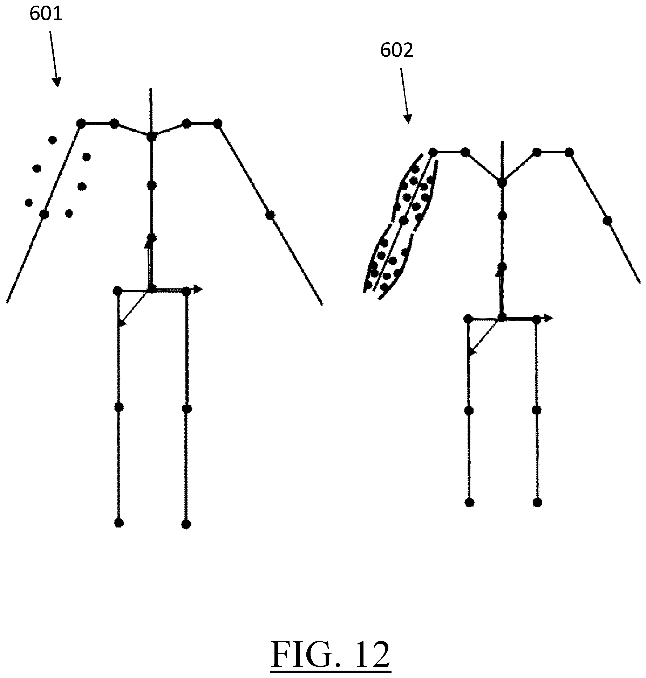

The objective of the method is matching the posture and shape of source manikin with the target manikin. Initially, the size and shape of the target manikin is different from source manikin and its size is adjusted through the posture synchronization process. The method may use a skeleton-based methodology to match the target skin mesh with that of source mesh. As shown in the FIG. 12, the input corresponding to right arm is provided through surface landmarks 601 of the source manikin, and the target manikin is expected to deform the right arm shape 602 in line with those surface marks 601. The skeleton-based methodology may comprise:

- segregating mesh cloud for each bone, so as to determine the vertices of the mesh belonging to the segment of the first virtual manikin; and
- modifying the position of the determined vertices such that the resulting mesh contains the surface landmarks by

  ○ defining local coordinate frames;
  ○ determining shape functions;
  ○ deforming the local mesh using shape functions; and
  ○ converting local mesh to global to visualize the deformation.

The segregating of the mesh cloud for each bone is now discussed.

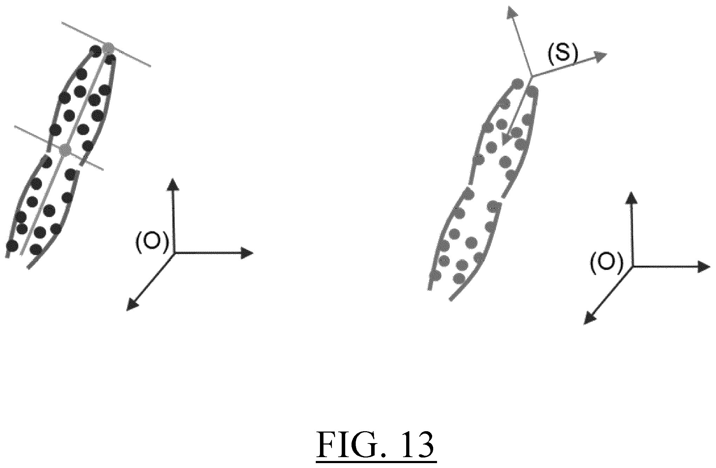

As the human shape variations mainly depends on the mass accumulated around the bones, in this procedure, the method may segregate the skin mesh and assign its vertices to each bone between two consecutive joints. For example, considering the mesh pertaining to right arms as shown in FIG. 13, the segregating may comprise attaching the mesh between shoulder and elbow to the upper arm and the mesh between elbow and wrist with the forearm. Initially, all the mesh vertices may be expressed in global coordinate frame 'O'. The method may deform the mesh around the bone by displacing the mesh vertices in a local coordinate frame 'S' as shown in the FIG. 13.

The defining of the local coordinate frames is now discussed.

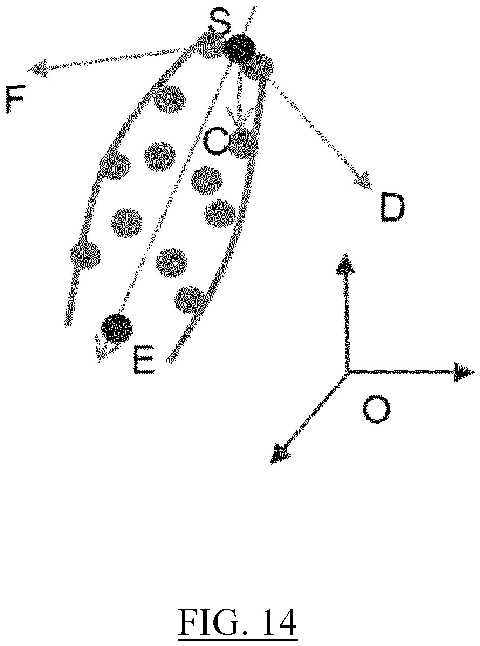

The defining of the local coordinate frames may comprise deducing dominant/principal axes for the chosen mesh point cloud using a Principal Component Analysis (PCA). The skin mass is concentrated around the bone, and therefore the method may comprise selecting one of the principal axes along the joints S and E as illustrated in FIG. 14.

The method may compute a vector along bone axis SE and consider it as one of the principal axis directions (first axis). The method may consider a point 'C' in the mesh point cloud as shown in the FIG. 14 and derive a vector SC. The method may compute the vector SD (second axis) from the cross product of SE and SC, which is normal to both these vectors. The method may compute SF from the cross product of SE and SD, which forms the third axis. The method may comprise normalizing SE, SD, SF which are the three principal directions and locating them at the center S creates a coordinate axis system. The method may use these coordinate axes to construct the orthogonal rotation matrix and with position vector at S a transformation matrix Ts can be constructed with respect to the global transformation matrix To. The local transformation Ts is computed from the product of inverse global matrix and Ts, e.g., using the formula:

$$\text{LocTs} = \text{inv To} * \text{Ts}.$$

The method may comprise multiplying the global mesh points with the LocTs to get the local mesh points with respect to local coordinate system established at S. Let Cs be the global mesh point and local point LocCs = LocTs * Cs.

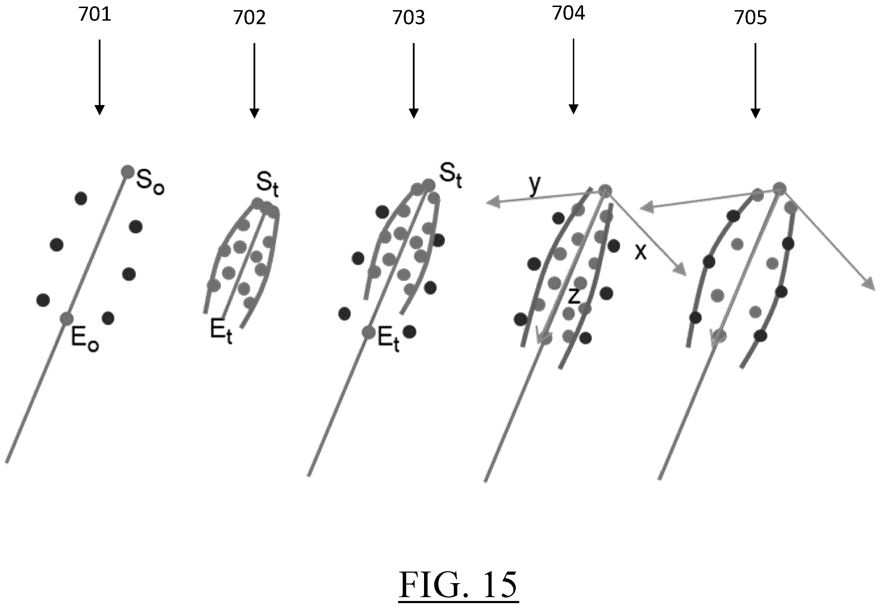

The determining of the shape functions is now discussed in reference to FIG. 15. The figure shows the bone length and surface landmarks pertaining to source manikin 701 and the same bone and mesh points on the target manikin 702. During the deformation, the length StEt is matched with SoEo (see the resulting superimposition 703). The method modifies the position of the mesh vertices along the bone as shown in the figure (see the result of the mesh modification 704) by adjusting the local Z values of the mesh vertices without disturbing the X & Y components which determine the shape of the skinning around the bone. The method also modifies the position of the mesh vertices in the X & Y directions in such a way that the new shape contains the surface marks of the source manikin (see the resulting mesh deformation 705).

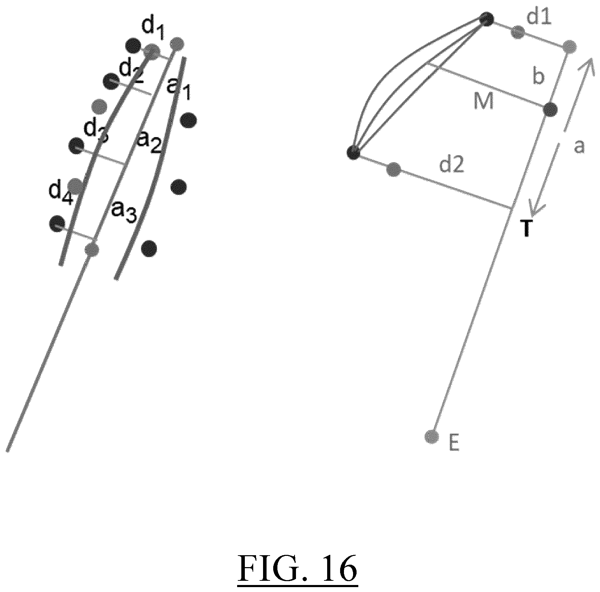

The shape matching is carried out by designing suitable shape interpolation functions between two chosen surface marks as shown in FIG. 16.

Let P1 and P2 be the shape functions covering the span 'a' of the bone length as shown in in FIG. 16. The value of P1 is 1 at the proximal end S of the bone and its value depreciates to 0 when the span tends from 0 to 'a' along the bone length. Similarly the shape function P2 changes from 0 to 1 as the span varies o to 'a'.

The method may use the formula $P_1 = (a\text{-}b)/a$; where $b$ is the z value of the mesh point M $(x,y,z)$ and its range is from 0 to a. Therefore at S the value of $P_1$ is 1 and

at T where span is 'a' the value is 0.

Similarly the method may use the formula $P_2 = b/a$; P2 is 0 at S and 1 at the location T.

$$P_1 \to 1 \text{ to } 0$$
$$P_2 \to 0 \text{ to } 1$$
$$\Big\} \text{ Span} \to 0 \text{ to } a$$

Using these shape functions, the method may use varieties of interpolation functions to estimate the deformation of the mesh points between two consecutive surface marks as shown in FIG. 16. Let the deform factor be the factor to deform the mesh points in X & Y directions of the local coordinate frame established. The deform factor be determined by the following interpolation functions:

$$\text{Deform factor1} = d1*P1+d2*P2$$

for linear interpolation

$$\text{Deform factor2} = d1*P1+d2* P2*P2$$

for quadratic interpolation

The deforming the local mesh using shape function is now discussed.

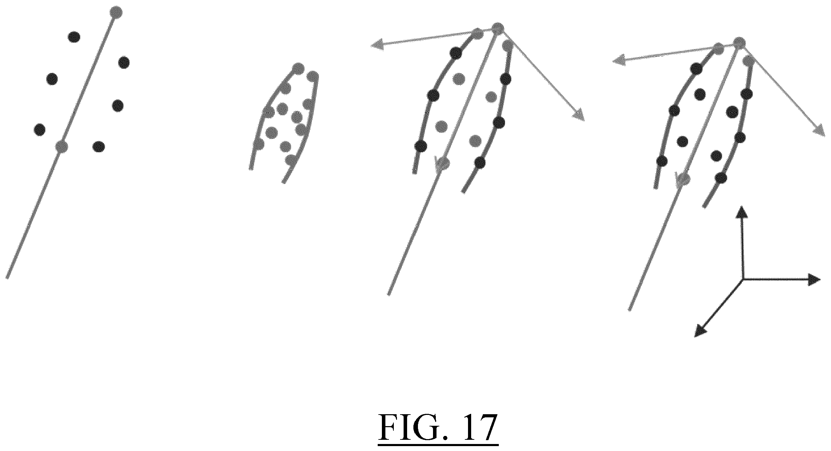

Once the deform factor is determined, as shown in FIG. 17, the method may comprise multiplying the X & Y coordinates for each mesh vertex (or point) by the deform factor to reshape the mesh so that the surface marks of the source manikin are accommodated. The method may then convert the new local mesh points to global mesh by multiplying with the global transformation matrix obtained from the product of global and new local coordinate systems as shown in FIG. 17, e.g., using the following formula:

$$\text{GCs} = \text{To} * \text{LocTs} * \text{LCs,}$$

wherein LCs is the local mesh point and GCs is the global point.

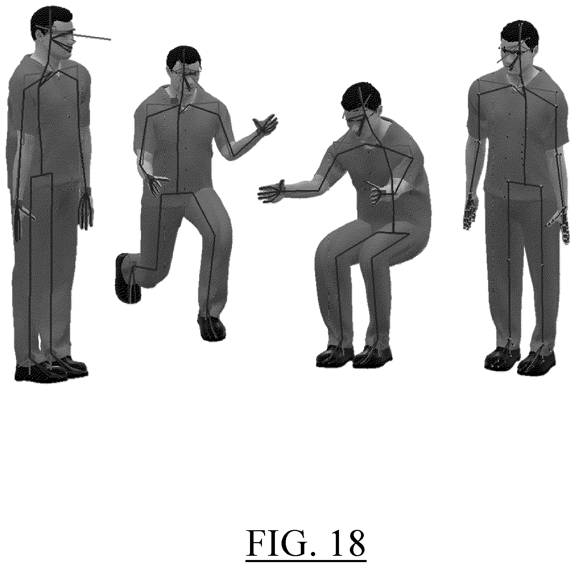

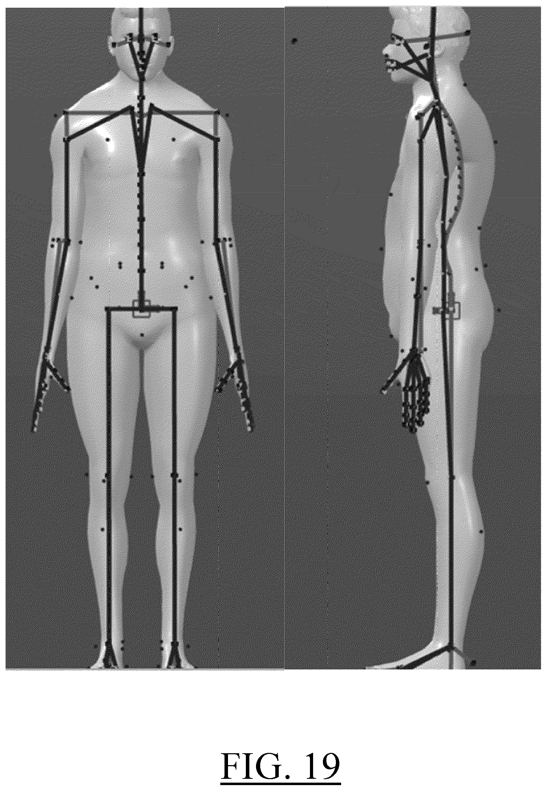

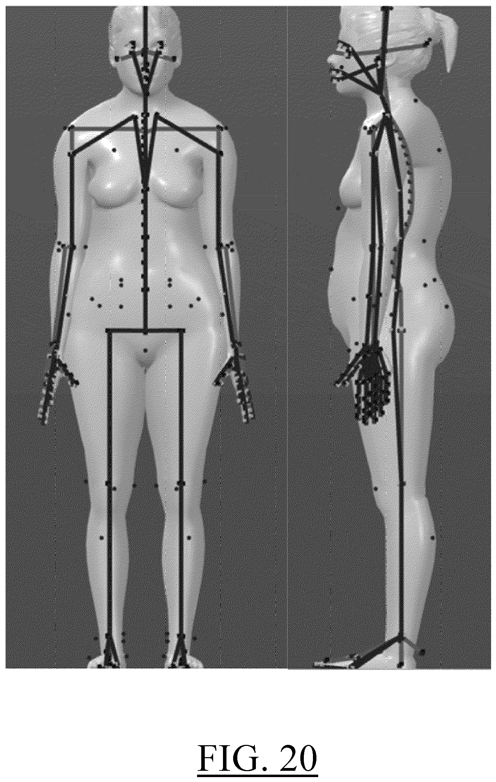

FIGs. 18 to 20 illustrate examples of results of alignment between the source and the target virtual manikins obtained using the method. FIG. 18 shows the alignment between the source and the target virtual manikins obtained using the method for different postures of the source virtual manikin. FIGs. 19 and 20 show the shape alignment between the source and the target virtual manikins obtained using the method.

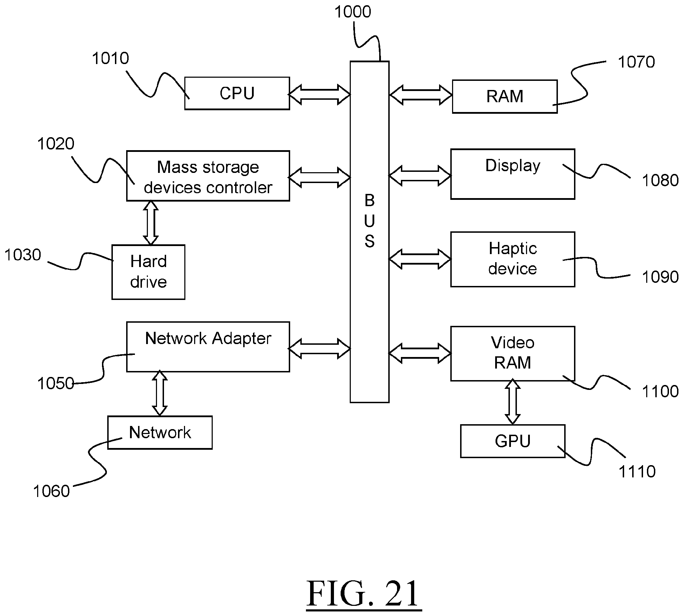

FIG. 21 shows an example of the system, wherein the system is a client computer system, *e.g.* a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for aligning a first virtual manikin with a second virtual manikin, the method comprising:

   - obtaining (S10) a first posture of the first virtual manikin matching a first posture of the second virtual manikin, each virtual manikin comprising joints each representing a respective articulation and segments each connecting a respective pair of joints, each respective joint of at least a portion of the joints of the first virtual manikin being associated with a respective joint of the second virtual manikin, each joint of the first virtual manikin and joint of the second of the virtual manikin associated together both representing a same respective articulation;
   - determining (S20), for each given joint of the first virtual manikin associated with a given joint of the second virtual manikin, an offset between a position of the given joint of the first virtual manikin and a position of the given joint of the second virtual manikin, the offset determined for at least one association of joints being non-zero;
   - obtaining (S30) a gesture of the second virtual manikin, the gesture comprising one or more second postures of the second virtual manikin; and
   - for each second posture of the gesture, determining (S40) a second posture of the first virtual manikin matching the second posture of the second virtual manikin, the determined offsets between the associated joints being maintained in each determined second posture.

2. The method of claim 1, wherein the first virtual manikin comprises at least one first pair of associated joints connected by a single segment, the second virtual manikin comprising, for each first pair, two or more segments between the joints associated with those of the first pair, the length of the single segment connecting each first pair in the first posture differing from that in at least one second posture.

3. The method of claim 1 or 2, wherein the joints of each virtual manikin include at least four distal joints, the segments connecting, for each virtual manikin, the pairs of joints successively up to the distal joints, each distal joint of the first virtual manikin being associated with a respective distal joint of the second virtual manikin, the offset determined for each association of distal joints being zero.

4. The method of claim 3, wherein each distal joint has an orientation, the orientations between the associated distal joints being equal in each determined second posture.

5. The method of any one of claims 1 to 4, wherein the obtaining (S10) of the first posture of the first virtual manikin matching the first posture of the second virtual manikin comprises performing a minimization of a cumulative distance between the associations of joints.

6. The method of any one of claims 1 to 5, wherein the first virtual manikin comprises at least one joint connected to two associated joints, the determining (S40) of the second posture of the first virtual manikin comprising aligning the at least one joint with the two associated joints.

7. The method of any one of claims 1 to 6, wherein each virtual manikin represents a respective skin shape, the first virtual manikin comprising a mesh having vertices positioned on the skin shape represented by the first virtual manikin, the second virtual manikin comprising surface landmarks positioned on the skin shape represented by the second virtual manikin, the method further comprising, after the determining (S40) of the second posture of the first virtual manikin matching the second posture of the second virtual manikin, deforming the mesh of the first virtual manikin to match with the surface landmarks of the second virtual manikin.

8. The method of claim 7, wherein the deforming of the mesh comprises, for each segment of the first virtual manikin:

   - determining the vertices of the mesh belonging to the segment of the first virtual manikin; and
   - modifying the position of the determined vertices such that the resulting mesh contains the surface landmarks.

9. The method of claim 8, wherein the deforming of the mesh further comprises, before the modifying of the position, determining a local coordinate system comprising a first axis along the segment and two second axes perpendicular to each other and to the first axis, the determined vertices having coordinates in the determined local coordinate system, the modifying of the position comprising, for each determined vertex, modifying the coordinates of the vertex along the two second axes.

10. The method of claim 9, wherein the deforming of the mesh further comprises, for each pair of successive surface landmarks along the first axis:

- determining a shape function between the successive surface landmarks of the pair; and
- estimating a deformation factor to be applied to the mesh between the surface landmarks of the pair based on the determined shape function and an interpolation function, and

wherein the modifying of the coordinates of the vertex along the two second axes comprises multiplying the coordinates of the vertex along the two second axes by the estimated deformation factor.

11. The method of any one of claims 1 to 10, wherein the number of joints of the first virtual manikin is lower than the number of joints of the second virtual manikin.

12. The method of any one of claims 1 to 11, wherein the first virtual manikin is an ergonomically accurate skeleton and/or the second virtual manikin is a biomechanically accurate skeleton.

13. A computer program comprising instructions for performing the method of any of claims 1-12.

14. A computer readable storage medium having recorded thereon a computer program of claim 13.

15. A system comprising a processor coupled to a memory and a graphical user interface, the memory having recorded thereon the computer program of claim 13.

Obtaining a first posture of the first virtual manikin matching a first posture of the second virtual manikin ⟍ S10

Determining, for each given joint of the first virtual manikin associated with a given joint of the second virtual manikin, an offset between a position of the given joint of the first virtual manikin and a position of the given joint of the second virtual manikin ⟋ S20

Obtaining a gesture of the second virtual manikin ⟋ S30

For each second posture of the gesture, determining a second posture of the first virtual manikin matching the second posture of the second virtual manikin ⟋ S40

## FIG. 1

# FIG. 2

# FIG. 3

FIG. 4

302

301

FIG. 5

FIG. 6

S42

S12

FIG. 7

401

402

403

FIG. 8

# FIG. 9

# FIG. 10

FIG. 11

601

602

FIG. 12

FIG. 13

FIG. 14

EP 4 604 065 A1

FIG. 15

FIG. 16

FIG. 17

FIG. 18

FIG. 19

## FIG. 20

FIG. 21

**EP 4 604 065 A1**

**EUROPEAN SEARCH REPORT**

Application Number

EP 24 30 5238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/118241 A1 (REDDI SARATH [IN] ET AL) 22 April 2021 (2021-04-22)<br>* figures 1, 2A-2C, 3A-3F *<br>* paragraph [0010] - paragraph [0060] *<br>- - - - - | 1-15 | INV.<br>G06T13/40 |
| Y | CN 107 424 203 A (UNIV HUNAN) 1 December 2017 (2017-12-01)<br>* figures 1,2 *<br>* paragraph [0017] - paragraph [0039] *<br>- - - - - | 1-15 | |

TECHNICAL FIELDS
SEARCHED (IPC)

G06T
G06F

The present search report has been drawn up for all claims

| Place of search | Date of completion of the search | Examiner |
|---|---|---|
| Munich | 27 June 2024 | Nash, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

38

## ANNEX TO THE EUROPEAN SEARCH REPORT
## ON EUROPEAN PATENT APPLICATION NO.

EP 24 30 5238

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2024

| Patent document cited in search report | Publication date | Patent family member(s) | | Publication date |
|---|---|---|---|---|
| US 2021118241 A1 | 22-04-2021 | CN | 112767528 A | 07-05-2021 |
| | | EP | 3813023 A1 | 28-04-2021 |
| | | JP | 2021068438 A | 30-04-2021 |
| | | US | 2021118241 A1 | 22-04-2021 |
| CN 107424203 A | 01-12-2017 | NONE | | |

For more details about this annex : see Official Journal of the European Patent Office, No. 12/82

EPO FORM P0459